# EUROPEAN PATENT SPECIFICATION

(11) **EP 2 284 971 B1**
(45) Date of publication and mention of the grant of the patent: **27.11.2013**
(21) Application number: 09754385.4
(22) Date of filing: 11.05.2009
(51) Int. Cl.: H02G 15/04, H02G 15/064

(54) **A CABLE SEALING END**
KABELANSCHLUSS-VERBINDUNGSTEIL
PARTIE DE CONNEXION DE TERMINAISON DE CÂBLE

(30) Priority: 30.05.2008 JP 2008142719
(43) Date of publication of application: 16.02.2011
(73) Proprietor: SWCC SHOWA CABLE SYSTEMS CO., LTD., Tokyo 105-0001 (JP)
(72) Inventor: SUMIMOTO, Tsutomu, Tokyo 105-0001 (JP); SEMA, Nobuyuki, Tokyo 105-0001 (JP)
(74) Representative: Glawe, Delfs, Moll
(86) International application number: PCT/JP2009/002043
(87) International publication number: WO 2009/144876

(56) References cited:
- EP-A1- 1 494 329
- DE-A1- 4 239 648
- FR-A- 938 199
- JP-A- 8 264 048
- JP-A- 9 320 404
- JP-A- 2001 008 350
- JP-A- 2002 135 959
- JP-U- 2 025 121
- US-A- 3 317 654

## Description

### TECHNICAL FIELD

This invention relates to a cable sealing end. Particularly, it relates to the cable sealing end which is provided with a flange part which projects toward an outer direction of a diameter direction at a rear-end part side of a bushing.

### BACKGROUND ART

Generally, in an equipment directly connected type cable sealing end, an insulating tube comprising such as an epoxy resin is assembled to cut electrically between a shielding layer of power cable and an equipment case which houses a power equipment.

A cable sealing end is disclosed in DE 42 39 648 A1.

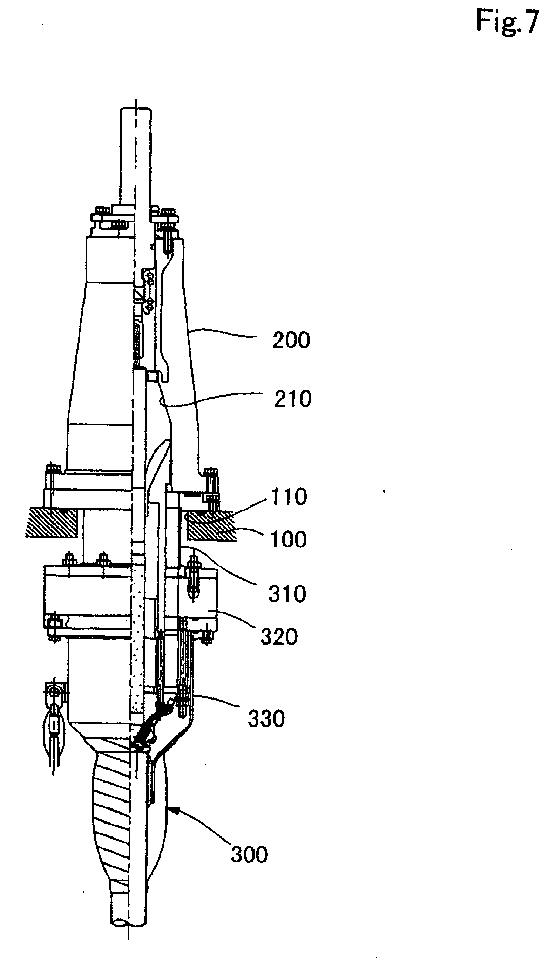

Heretofore, as the equipment directly connected cable sealing end which has the insulating tube like this, as shown in Fig. 7, the one that an epoxy bushing 200 is provided inside in the air tight at a rim part of an opening part 110 of an equipment case 100, a cable termination 300 is attached to an receiving port 210 of the aforementioned epoxy bushing 200, and an outer circumference of the aforementioned cable termination 300 is surrounded by a lower metal fitting 310 which passes through the opening part 110 of the equipment case 100, an insulating tube 320 and a cable protective metal fitting 330 is known (for example, refer to Patent document No.1 and No.2).

However, in the equipment directly connected cable sealing end of such composition, because the insulating tube 320 is arranged between the lower metal fitting 310 which passes through the opening part 110 of the equipment case 100 and the cable protective metal fitting 330, there were difficult points that the cable sealing end became long beyond necessity and became big in whole. Besides, because the insulating tube 320 must be arranged between the lower metal fitting 310 and the cable protective metal fitting 330, there were difficult points that the number of components became much and the cost became expensive.

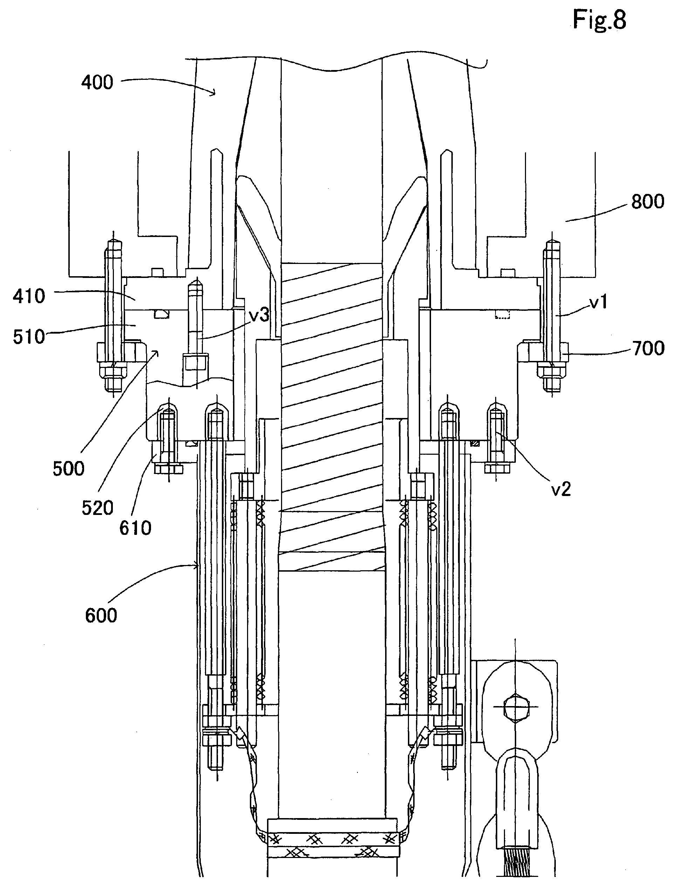

Therefore, as shown in Fig. 8, the cable sealing end that the insulating tube 500 is directly attached to the rear-end part side of the epoxy bushing 400, and a pressure metal fitting 600 is arranged at the rear-end part side of the aforementioned insulating tube 500 is originated. Here, the insulating tube 500 and the pressure metal fitting 600 are assembled and fixed as follows. First, a flange part (hereinafter called "insulating tube flange part") 510 which is provided at a side facing the epoxy bushing 400 of the insulating tube 500 is touched to a flange part (hereinafter called "bushing flange part") 410 which comprises a metal fitting which is provided at the rear-end part side of the epoxy bushing 400, and an annular holding metal fitting 700 is arranged at a rear-end surface side of the insulating tube flange part 510. And, by screwing up a fore-end part of a first bolt v1 which is inserted to a bolt insertion hole of the aforementioned holding metal fitting 700 to the equipment case 800, the insulating tube 500 which is fixed preliminarily to the bushing flange part 410 by a third bolt v3 is fixed to the epoxy bushing 400. On the other hand, a flange part (hereinafter called "pressure metal fitting flange part") 610 which is provided at the side facing the insulating tube 500 of the pressure metal fitting 600 is touched to the rear-end surface side of the insulating tube 500, and, by screwing up the fore-end part of a second bolt v2 which is inserted to the bolt insertion hole of the pressure metal fitting flange part 610 to an embedded metal fitting 520 which is embedded in the insulating tube 500, the pressure metal fitting 600 is fixed to the insulating tube 500.

However, according to the cable sealing end of such composition, when comparing with the cable sealing end which is shown in Fig. 7, although the cable sealing end can be shortened to the extent that the lower metal fitting 310 does not exist, because the electric potential of the first bolt v1 is equal to the equipment case 800 and the electric potential of the second bolt v2 is equal to the pressure metal fitting 600, a creepage distance of the insulating tube 500, that is, the creepage distance between the first bolt v1 and the second bolt v2 becomes short, and there was a difficult point that a sufficient electric performance could not be obtained.

### PRIOR ART DOCUMENT

### PATENT DOCUMENT

Patent document No.1: Utility model publication number H06-9340
Patent document No.2: Patent publication number 2001-16756

### SUMMARY OF THE INVENTION

### PROBLEM TO BE SOLVED BY THE INVENTION

This invention was performed to solve the above-mentioned difficult points. This invention has a purpose to provide the cable sealing end which can improve the strength of the flange part which is provided at the rear-end part side of the bushing, and lengthen the creepage distance of the insulating tube, and further attempt the compactification of the cable sealing end.

### MEANS FOR SOLVING THE PROBLEMS

A cable sealing end of first feature of this invention is provided according to claim 1.

As for the cable sealing end of second feature of this invention, in the cable sealing end of the first feature, a surface facing the equipment case of the flange part of the bushing is touched to an outer surface of the opening part of the equipment case in the airtight.

As for third feature of this invention, in the cable sealing end of any one of the first feature to the third feature, a conular tapered surface whose diameter reduces toward an outer edge side of an end face facing the equipment case of the pressure metal fitting flange part from a top of the projection part is provided at an inner peripheral surface of the annular projection part.

### EFFECT OF THE INVENTION

According to the cable sealing end of this invention, first, by providing the annular projection part at the flange part (bushing flange part) of the bushing, when comparing with the existing cable sealing end which does not have the insulating tube, the aforementioned projection part can have the function as the insulating tube, and the stress of the bushing flange part is eased, and consequently, the strength of the bushing flange part can be improved. Second, by providing the annular projection part like this at the bushing flange part, when comparing with the existing cable sealing end, the creepage distance can be lengthened even if not lengthening the insulating tube part of the bushing, and consequently, the sufficient electric performance can be ensured. Third, in the cable sealing end of this invention, because a part (pressure metal fitting flange part) of a pressure unit of a stress-relief cone can be arranged at the inside of the annular projection part, the cable sealing end can be shortened to the extent that the pressure unit is arranged at the inside of the projection part, and consequently, the compactification of the cable sealing end can be attempted.

### BRIEF DESCRIPTION OF THE FIGURES

[Fig.1] The partial sectional view which shows an example of the cable sealing end of this invention.
[Fig.2] The enlarged sectional view of the essential part of the bushing of the cable sealing end shown in Fig.1.
[Fig.3] The explanation view which shows the comparison of the creepage distance of the insulating part in the existing cable sealing end and the creepage distance of the insulating part in the cable sealing end of this invention.
[Fig.4] The enlarged sectional view of the essential part which shows the other embodiment of the bushing in the cable sealing end of this invention.
[Fig. 5] The enlarged sectional view of the essential part which shows the other embodiment of the bushing in the cable sealing end of this invention.
[Fig. 6] The enlarged sectional view of the essential part which shows the other embodiment of the bushing in the cable sealing end of this invention.
[Fig.7] The partial sectional view which shows an example of the conventional cable sealing end.
[Fig.8] The partial sectional view which shows an example of the conventional cable sealing end.

### MODE FOR CARRYING OUT THE INVENTION

Hereinafter, preferred embodiments that the cable sealing end of this invention is applied are explained, with reference to the drawings. In addition, in the following explanation, it is explained that "the fore-end part" of the bushing, an inner conductor, the pressure unit and the cable protective metal fitting is respectively an upper direction in the drawing, and "the rear-end part" of the bushing, the inner conductor, the pressure unit and the cable protective metal fitting is an end part of the opposite side of the fore-end part, and corresponds to a lower direction in the drawing.

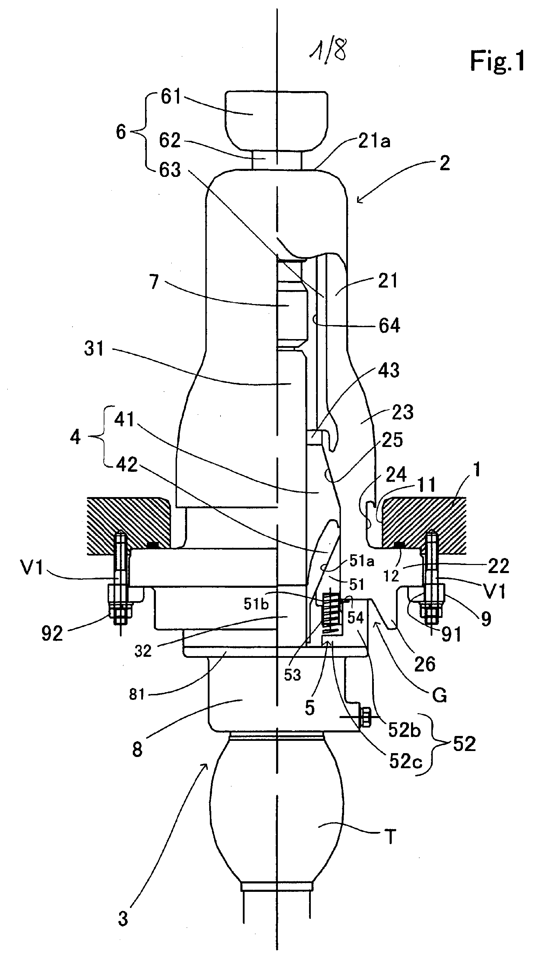

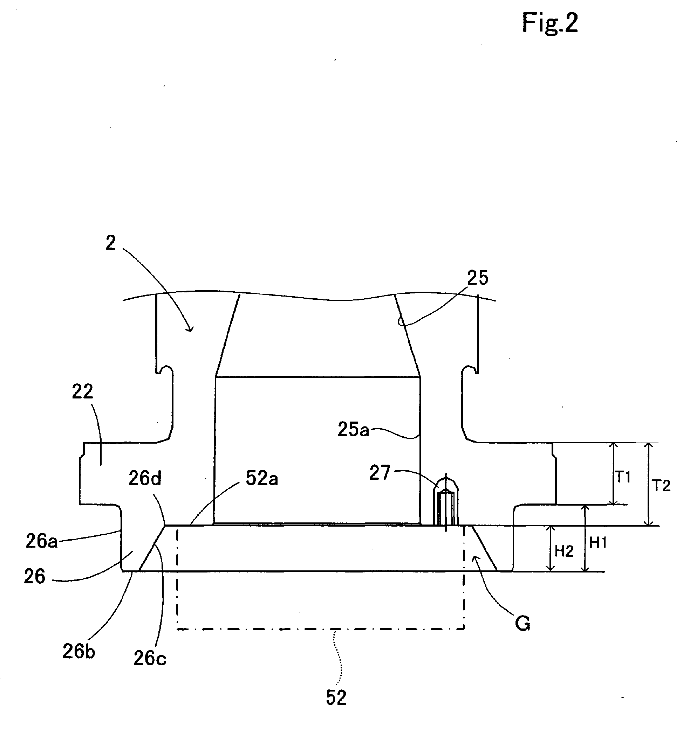

Fig.1 shows a partial cross-sectional view of a gas immersed sealing end of a 154kV class CV cable that the cable sealing end of this invention is applied, and Fig.2 shows a enlarged cross-sectional view of the essential part of the bushing in the gas immersed sealing end of the same.

In Fig.1, the gas immersed sealing end in this invention is provided with the equipment case 1 which houses the power equipment (not shown in the drawing) such as a switchgear or a transformer in the air tight, the bushing 2 that the fore-end part is positioned at the inside of the equipment case 1 and the rear-end part is installed in the air tight at the rim part of the opening part 11 of the equipment case 1 so as to close the opening part 11, the cable termination 3 which is attached to the inside of the bushing 2 and the annular pressure unit 5 which presses axially toward the fore-end part side of the bushing 2 the stress-relief cone 4 which is attached to the cable termination 3.

The bushing 2 is provided with a cylindrical head 21 which is provided at the fore-end part, the flange part (hereinafter called "bushing flange part") 22 which is provided at the rear-end part side so as to project toward the outer direction of the diameter direction, a curved part 23 which is provided at the rear-end part side of the head 21 and showing the curved convex shape, and an electric-field stress-control part 24 which is provided at a consecutively-installed part of the curved part 23 and the bushing flange part 22. And the tapered receiving port 25 whose diameter reduces gradually toward the position corresponding to the curved part 23 from the position corresponding to the electric-field stress-control part 24 is provided concentrically to the bushing 2 so as to consecutively lead to an after-mentioned conductor insertion hole 64 at the inside of the bushing 2.

Besides, the annular projection part 26 is provided concentrically to the bushing 2 and integrally to the bushing flange part 22 at the rear-end surface side of the bushing flange part 22. And a part of the pressure unit 5 (the pressure metal fitting flange part 52) of the after-mentioned stress-relief cone 4 is arranged concentrically to the bushing 2 through the after-mentioned space G at an inner peripheral surface side of this projection part 26.

As shown in Fig.2, the annular projection part 26 has a vertical plane 26a which is perpendicular to the bushing flange part 22 at the outer peripheral part, and the space G which increases the creepage distance to an end face (hereinafter called "fore-end surface") 52a facing the equipment case 1 (refer to Fig.1) of the pressure metal fitting flange part 52 from a top 26b of the projection part 26 is provided between an inner peripheral part of the projection part 26 and the outer peripheral surface of the pressure metal fitting flange part 52. Concretely, by providing a conular tapered surface 26c whose diameter reduces toward an outer edge side of the fore-end surface 52a of the pressure metal fitting flange part 52 from the top 26b of the projection part 26 at the inner peripheral part of the annular projection part 26, the creepage distance between the top 26b of the annular projection part 26 and the fore-end surface 52a of the pressure metal fitting flange part 52 increases. In this embodiment, by assuming the size between the top 26b of the projection part 26 and the outer peripheral surface of the pressure metal fitting flange part 52 corresponding to the aforementioned top 26b to be about 22mm, and by assuming the size between an inner edge side (hereinafter called "inner edge side rising part") 26d of the rising part (a consecutively-installed part of the rear-end surface side of bushing flange part 22 and the projection part 26) of the projection part 26 and an outer circumference of the fore-end surface 52a of the pressure metal fitting flange part 52 corresponding to the aforementioned inner edge side rising part 26d to be about 5mm, the above-mentioned creepage distance is ensured. Besides, a thickness T1 of the outer edge side of the bushing flange part 22 is about 40mm, and the size H1 of the height to the top 26b of the projection part 26 from the rear-end surface of the outer edge side of the bushing flange part 22 is almost equal to the thickness T1 of the bushing flange part 22 or slightly larger than this thickness T1. Furthermore, the size H2 of the height to the top 26b of the projection part 26 from the rear-end surface of the inner edge side of the bushing flange part 22 is shorter than the above-mentioned size H1 of the height. Therefore, the thickness T2 of the inner edge side of the bushing flange part 22 is formed to be slightly thicker than the thickness T1 of the outer edge side of the bushing flange part 22.

Here, the bushing 2 and the projection part 26 comprise a hard insulator such as epoxy resin, and are molded integrally together with an after-mentioned inner conductor 6. Besides, the outside diameter of the bushing flange part 22 is larger than the bore diameter of the opening part 11 of the equipment case 1, and the inside diameter of the inner edge side rising part 26d of the projection part 26 is larger than the outside diameter of the pressure metal fitting flange part 52. Furthermore, the conductive coating material (not shown in the drawing) is coated on the outside surface of the electric-field stress-control part 24. In addition, in Fig.2, the numeral 27 shows plural (for example 6 pieces) embedded metal fittings (only one piece is shown in the drawing) which are embedded at the bushing flange part 22 so that they are placed at the equal distances along the circumferential direction.

As shown in Fig.1, the inner conductor 6 is provided with a conductor extracting part 61 which is projected from the top 21a of the head 21 of the bushing 2, and a cylindrical part 63 which is connected consecutively at the rear-end part side of the conductor extracting part 61 through a neck 62 and embedded concentrically to the bushing 2 in the inside of the head 21 of the bushing 2. And the conductor insertion hole 64 which is seen in a circle in a cross-section is provided astride the neighborhood of the neck 62 from the rear-end part of the cylindrical part 63 at the inside of the cylindrical part 63. Besides, a columnar boss (not shown in the drawing) is projected concentrically to the conductor insertion hole 64 so that it faces an after-mentioned connecting terminal 7 at a central portion of a depth wall (not shown in the drawing) of the cylindrical part 63, and one end part side of a ring-shaped contact (not shown in the drawing) as a tulip contact is inserted and latched together at the aforementioned boss.

The cable termination 3 is provided with a cable insulator 31 that the terminal of CV cable is exposed by the step-stripped process, and the spindle-shaped stress-relief cone 4 is attached to the outer circumference of the cable insulator 31 astride an outer semi-conducting layer 32 of the cable. Here, the stress-relief cone 4 comprises an insulating part 41 having rubber-like elasticity such as ethylene-propylene rubber (EPR) and a semi-conducting part 42, and a shrinking-shaped tapered part corresponding to an inner peripheral wall of the receiving port 25 is provided at the outer circumference of the insulating part 41.

The pressure unit 5 is provided with an annular pressure metal fitting 51 having the bugle-shaped opening part 51a which is touched to the cone-shaped outer peripheral surface of the semi-conducting part 42 of the stress-relief cone 4, and the annular pressure metal fitting flange part 52 which is arranged at the outer circumference of the aforementioned pressure metal fitting 51. And plural spring insertion holes 51b are placed at the equal distances along the circumferential direction at the rear-end part side of the pressure metal fitting 51, and coil-shaped springs 53 are attached to the aforementioned spring insertion holes 51b respectively. Besides, the pressure metal fitting flange part 52 is provided with a cylindrical member 52b, and an annular pressure member 52c which is projected to the inner direction of the diameter direction at the rear-end part side of the cylindrical member 52b. Here, the outside diameter of the pressure metal fitting 51 is slightly smaller than the bore-diameter of the insertion hole 25a (refer to Fig. 2) which is provided at the bushing flange part 22, and the outside diameter of the cylindrical member 52b of the pressure metal fitting flange part 52 is slightly smaller than the inside diameter of the inner edge side rising part 26d (refer to Fig.2) of the annular projection part 26. Besides, the inside diameter of the annular pressure member 52c is slightly larger than the outside diameter of the outer semi-conducting layer 32 of the cable as the cable core. In addition, the pressure metal fitting 51, the pressure metal fitting flange part 52 and the spring 53 of such composition are assembled preliminarily and integrally as shown in the drawing.

Next, the assembling method of the gas immersed sealing end in this invention which is composed in this way is explained.

First, the head 21 and the curved part 23 of the bushing 2 are positioned in the inside of the equipment case 1, and the surface facing the equipment case of the bushing flange part 22 is touched to the outer surface of the equipment case 1 through an O-ring 12, and an annular pressure metal fitting 9 is arranged at the rear-end surface side of the bushing flange part 22. And, the first bolt V1 is inserted in the plural (for example 12 pieces) bolt insertion holes 91 (only two pieces are shown in the drawing) which are provided at the annular pressure metal fitting 9 so that they are placed at the equal distances along the circumferential direction, and the fore-end part of the aforementioned first bolt V1 is screwed up to the equipment case 1. Thereby, the bushing 2 (the bushing flange part 22) is fixed to the equipment case 1 in the air tight.

Next, the cable termination 3 is inserted in the inside of the bushing 2, and the connecting terminal 7 is connected to the other end part side of the ring-shaped contact (not shown in the drawing) as the tulip contact by plug-in system. And, the opening part 51a of the pressure metal fitting 51 which is fitted into the cable termination 3 side preliminarily is touched to the semi-conducting part 42 of the stress-relief cone 4, and furthermore, the cylindrical member 52b of the pressure metal fitting flange part 52 is arranged at the inside of the projection part 26.

Next, the second bolts (not shown in the drawing) are inserted into the plural (for example 6 pieces) bolt insertion holes (not shown in the drawing) which are preliminarily placed at the equal distances along the circumferential direction at the cylindrical member 52b which composes the pressure metal fitting flange part 52, and the fore-end parts of the aforementioned second bolts are screwed up into screw holes of the embedded metal fitting 27 (refer to Fig.2) which are embedded at the bushing flange part 22. And, if the second bolts turn, because the second bolts advance spirally, the holding member 52c goes into toward the bushing 2 side, consequently each spring 53 is pressed toward the bushing 2 side, and the spring force of the axial direction is given to each spring 53. Thereby, the shrinking-shaped tapered part of the stress-relief cone 4 is pressed to the inner peripheral wall of the receiving port 25, consequently the insulating performance of the interface between the inner peripheral wall of the receiving port 25 and the tapered part of the stress-relief cone 4 and the insulating performance of the interface between the cable insulator 31 and the stress-relief cone 4 are ensured.

Next, the cable protective metal fitting 8 which comprises such as aluminum alloy hardware which is fitted into the cable termination 3 side preliminarily is carried back to the predefined position, and the flange part 81 which is formed at the fore-end part of the cable termination 8 is touched to the rear-end surface of the pressure metal fitting flange part 52, and the both are fastened by a third bolt (not shown in the drawing).

In addition, in Fig.1, the numeral 43 shows an annular stopper which is arranged at the fore-end part of the stress-relief cone 4, the numeral 54 shows the O-ring which is arranged between the bushing flange part 22 and the pressure metal fitting flange part 52, the numeral T shows a corrosion proof layer which is wound astride between a sheath of the CV cable and the cable protective metal fitting 8, and the numeral 92 shows a nut.

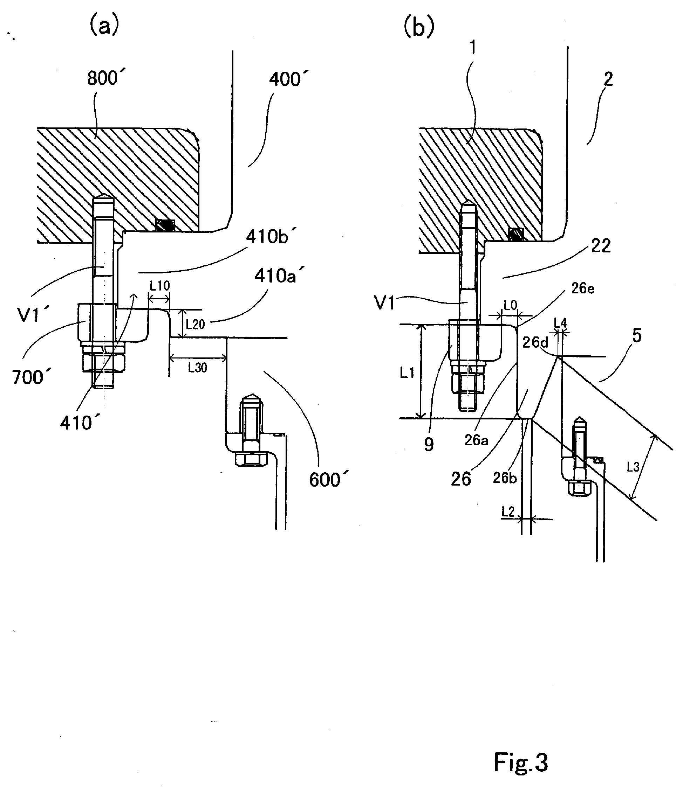

As described above, according to the cable sealing end of this invention, first, by providing the annular projection part 26 at the bushing flange part 22, when comparing with the existing cable sealing end which does not have the insulating tube, the aforementioned projection part 26 can have the function as the insulating tube, and the stress of the bushing flange part 22 is eased, and consequently, the strength of the bushing flange part 22 can be improved. Second, by providing the annular projection part 26 like this at the bushing flange part 22, when comparing with the existing cable sealing end, the creepage distance can be lengthened even if not lengthening the insulating tube part of the bushing, and consequently, the sufficient electric performance can be ensured. Concretely, as shown in Fig.3 (a), in the conventional cable sealing end, the creepage distance La is approximately L10 (the size to the outer circumference of the thick-walled part 410a' of the bushing flange part 410' which is fixed to the equipment case 800' by the holding metal fitting 700' and the bolt V1' from the inner circumference of the holding metal fitting 700') + L20 (the distance of the vertical plane of the bump part of the bushing flange part 410' " the size to the outer circumference of the rear-end surface of the thick-walled part 410a' of the bushing flange part 410' from the outer edge side of the consecutively-installed part of the thin-walled part 410b' and the thick-walled part 410a' of the bushing flange part 410'") + L30 (the size to the outer circumference of the pressure unit 600' which is arranged at the rear-end part of the thick-walled part 410a' of the bushing flange part 410' from the outer circumference of the thick-walled part 410a' of the bushing flange part 410'), these parts function as the insulating tube. On the other hand, in the cable sealing end of this invention, as shown in Fig.3 (b), the creepage distance Lb is approximately L0 (the size to the outer edge side (hereinafter called "outer edge side rising part) 26e of the rising part, "the consecutively-installed part of the rear-end surface side of the bushing flange part 22 and the projection part 26", of the projection part 26 from the inner circumference of the holding metal fitting 9) + L1 (the vertical plane 26a of the projection part 26, "the size to the top 26b of the projection part 26 from the outer edge side rising part 26e") + L2 (the horizontal distance of the top 26b of the projection part 26) + L3 (the size to the inner edge side rising part 26d of the projection part 26 from the top 26b of the projection part 26) + L4 (the size to the outer circumference of the pressure unit 5 from the inner edge side rising part 26d of the projection part 26). And, because the latter creepage distance Lb becomes longer than the former creepage distance La (Lb > La), the creepage distance of the cable sealing end of this invention can be lengthened. Third, in the cable sealing end of this invention, because a part (pressure metal fitting flange part 52) of a pressure unit 5 of a stress-relief cone 4 can be arranged at the inside of the annular projection part 26, the cable sealing end can be shortened to the extent that the pressure unit 5 is arranged at the inside of the projection part 26, and consequently, the compactification of the cable sealing end can be attempted.

### INDUSTRIAL APPLICABILITY

In the aforementioned embodiment, although this invention is explained by the particular embodiments shown in drawing, this invention is not limited to these embodiments, and, as long as the effect of this invention is shown, it is possible to compose as follows.

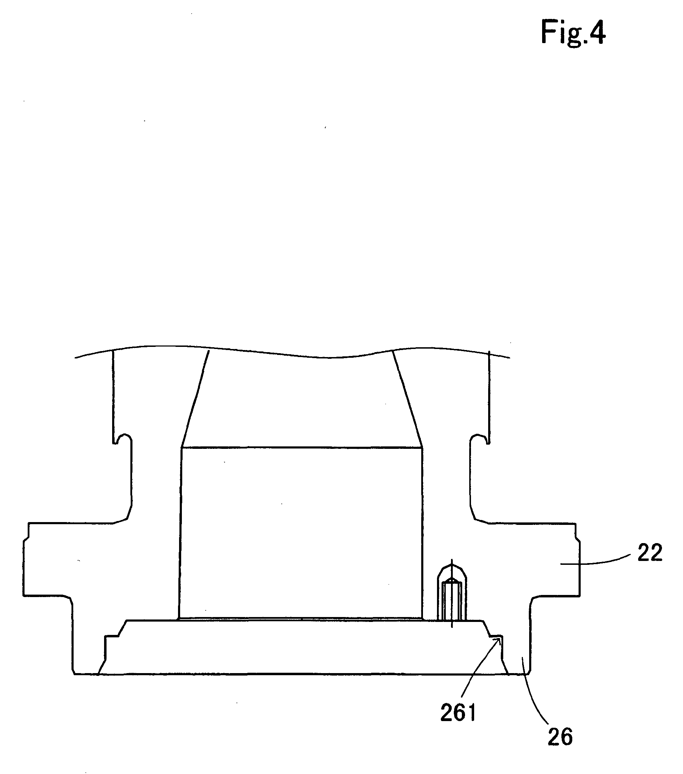

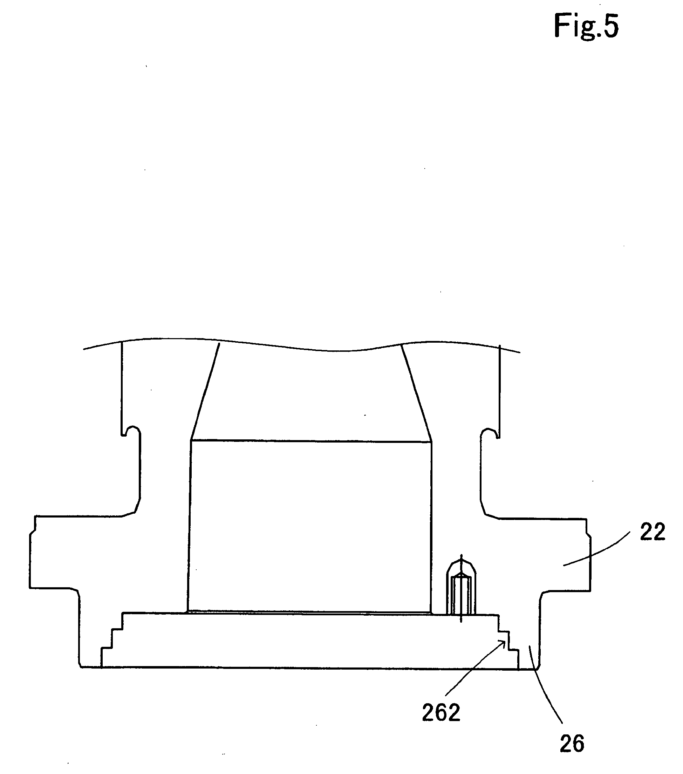

First, in the aforementioned embodiment, although the tapered surface 26c is formed at the inner circumference part of the projection part, as shown in Fig.4, an annular notch part 261 may be formed at the aforementioned tapered surface 26c, or as shown in Fig. 5, a step-like ruggedness 262 may be formed.

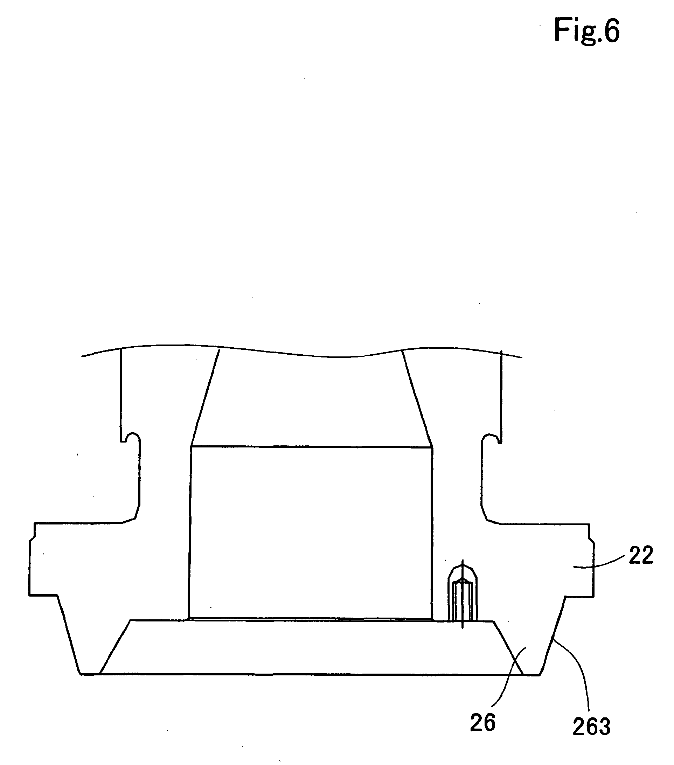

Second, in the aforementioned embodiment, although the vertical plane 26a is formed at the outer circumference part of the projection part, as shown in Fig.6, instead of the vertical plane 26a, a conular tapered surface 263 whose diameter expands toward the rear-end surface side of the outer edge part of the bushing flange part 22 from the top of the projection part 26 may be formed.

Third, in the aforementioned embodiment, although the case that the stress-relief cone 4 is formed by the ethylene-propylene rubber (EPR) is explained, it may be formed by such as the silicone rubber.

Fourth, in the aforementioned embodiment, although the case applying the indoor/outdoor termination is explained, the gas immersed sealing end or the oil immersed sealing end may be applied.

Fifth, in the aforementioned embodiment, although the indoor/outdoor termination that the application voltage is 154kV class is explained, it is not limited to this voltage.

### EXPLANATION OF THE NUMERALS

- 1: equipment case
- 11: opening part
- 2: bushing
- 22: flange part (bushing flange part)
- 25: receiving port
- 26: projection part
- 26c: tapered surface
- 3: cable termination
- 4: stress-relief cone
- 5: pressure unit
- 52: pressure metal fitting flange part
- G: space

## Claims

1. A cable sealing end comprising,
a bushing (2) which is attached to an opening part (11) of an equipment case (1) which houses a power equipment in the air tight,
a cable termination (3) which is attached to a receiving port (25) of said bushing (2),
a pressure unit (5) which presses a stress-relief cone (4) which is attached to said cable termination (3) toward said bushing (2) side, and
a flange part (22) which projects toward an outer direction of a diameter direction at a rear-end part side of said bushing (2), **characterized in that**:
an outside diameter of said flange part (22) is larger than a bore diameter of said opening part (11) of said equipment case (1),
an annular projection part (26) which projects toward a rear-end side of an axial direction is provided concentrically and integrally to said flange part (22) by being molded at a rear-end surface side of said flange part (22) and between a neighborhood of an outer edge side of said flange part (22) and an outer circumference of said pressure unit (5),
an annular pressure metal fitting flange part (52) which composes said pressure unit (5) is arranged at an inner circumference side of said projection part (26) concentrically to said bushing (2) so that an outside diameter of said pressure metal fitting flange part (52) becomes smaller than an inside diameter of an inner edge side rising part (26d) of said projection part (26),
a space (G) which increases a creepage distance to an outer edge side of an end face facing said equipment case (1) of said pressure metal fitting flange part (52) from a top (26b) of said projection part (26) is provided between an inner peripheral surface of said projection part (26) and an outer peripheral surface of said pressure metal fitting flange part (52).

2. A cable sealing end according to claim 1, **characterized in that**:
a surface facing said equipment case (1) of said flange part (22) is touched to an outer surface of an opening part (11) of said equipment case (1) in the air tight.

3. A cable sealing end according to claim 1 or claim 2, **characterized in that**:
a conular tapered surface (26c) whose diameter reduces toward an outer edge side of an end face facing said equipment case (1) of said pressure metal fitting flange part (52) from a top (26b) of said projection part (26) is provided at an inner peripheral surface of said projection part (26).

## Patentansprüche

1. Kabelendverschluss, der Folgendes umfasst:
eine Buchse (2), die an einem Öffnungsteil (11) eines Gerätegehäuses (1), das unter Luftabschluss ein Leistungsgerät beherbergt, angebracht ist,
einen Kabelabschluss (3), der an einer Aufnahmeöffnung (25) der Buchse (2) angebracht ist,
eine Druckeinheit (5), die einen Zugentlastungskegel (4), der an dem Kabelabschluss (3) angebracht ist, in Richtung der Buchsenseite (2) drückt, und
einen Flanschteil (22), der in Richtung einer äußeren Richtung einer Durchmesserrichtung an einer rückwärtigen Endteilseite der Buchse (2) hervorsteht, **dadurch gekennzeichnet, dass**:
ein Außendurchmesser des Flanschteils (22) größer als ein Bohrungsdurchmesser des Öffnungsteils (11) des Gerätegehäuses (1) ist,
ein ringförmiger vorstehender Teil (26), der in Richtung einer rückwärtigen Endseite einer axialen Richtung hervorsteht, dadurch konzentrisch und einstückig mit dem Flanschteil (22) bereitgestellt ist, dass er an einer rückwärtigen Oberflächenseite des Flanschteils (22) und zwischen einer Umgebung einer Außenkantenseite des Flanschteils (22) und eines Außenumfangs der Druckeinheit (5) geformt ist,
ein ringförmiges metallenes Druckanschlussflanschteil (52), das die Druckeinheit (5) bildet, an einer inneren Umfangsseite des vorstehenden Teils (26) konzentrisch zu der Buchse (2) angebracht ist, so dass ein Außendurchmesser des metallenen Druckanschlussflanschteils (52) schmaler als ein Innendurchmesser eines an einer Innenkantenseite hervorstehenden Teils (26d) des vorstehenden Teils (26) wird,
ein Raum (G), der eine Kriechstrecke von einer Oberseite (26b) des vorstehenden Teils (26) zu einer Außenkantenseite einer Endfläche des metallenen Druckanschlussflanschteils (52), die dem Gerätegehäuse (1) zugewandt ist, vergrößert, zwischen einer inneren Umfangsfläche des vorstehenden Teils (26) und einer äußeren Umfangsfläche des metallenen Druckanschlussflanschteils (52) vorgesehen ist.

2. Kabelendverschluss gemäß Anspruch 1, **dadurch gekennzeichnet, dass**:
eine Fläche des Flanschteils (22), die dem Gerätegehäuse (1) zugewandt ist, von einer äußeren Fläche eines Öffnungsteils (11) des Gerätegehäuses (1) unter Luftabschluss berührt wird.

3. Kabelendverschluss gemäß Anspruch 1 oder 2, **dadurch gekennzeichnet, dass**:
eine konisch verjüngte Fläche (26c), deren Durchmesser von einer Oberseite (26b) des vorstehenden Teils (26) in Richtung einer Außenkantenseite einer Endfläche des metallenen Druckanschlussflanschteils (52), die dem Gerätegehäuse (1) zugewandt ist, abnimmt, an einer inneren Umfangsfläche des vorstehenden Teils (26) vorgesehen ist.

## Revendications

1. Extrémité d'étanchéité de câble comprenant:
une douille (2) qui est fixée sur une partie d'ouverture (11) d'un boîtier d'équipement (1) qui loge un équipement de puissance de manière étanche à l'air,
une terminaison de câble (3) qui est fixée à un orifice de réception (25) de ladite douille (2),
une unité de pression (5) qui comprime un cône de décharge (4) qui est fixé sur ladite terminaison de câble (3) vers le côté de ladite douille (2), et
une partie de bride (22) qui fait saillie vers une direction externe d'une direction diamétrale du côté d'une partie d'extrémité arrière de ladite douille (2), **caractérisée en ce que**:
un diamètre extérieur de ladite partie de bride (22) est supérieur à un diamètre d'alésage de ladite partie d'ouverture (11) dudit boîtier d'équipement (1),
une partie de saillie annulaire (26) qui fait saillie vers un côté d'extrémité arrière d'une direction axiale est prévue de manière concentrique et solidaire par rapport à ladite partie de bride (22) en étant moulée du côté de la surface d'extrémité arrière de ladite partie de bride (22) et entre un voisinage d'un côté de bord externe de ladite partie de bride (22) et une circonférence externe de ladite unité de pression (5),
une partie de bride de raccord métallique de pression annulaire (52) qui compose ladite unité de pression (5) est agencée d'un côté circonférentiel interne de ladite partie de saillie (26) de manière concentrique à ladite douille (2) de sorte qu'un diamètre externe de ladite partie de bride de raccord métallique de pression (52) est plus petit qu'un diamètre interne d'une partie montante (26d) du côté du bord interne de ladite partie de saillie (26),
un espace (G) qui augmente une ligne de fuite du côté d'un bord externe d'une face d'extrémité faisant face audit boîtier d'équipement (1) de ladite partie de bride de raccord métallique de pression (52) à partir d'une partie supérieure (26b) de ladite partie de saillie (26) est prévu entre une surface périphérique interne de ladite partie de saillie (26) et une surface périphérique externe de ladite partie de bride de raccord métallique de pression (52).

2. Extrémité d'étanchéité de câble selon la revendication 1, **caractérisée en ce que**:
une surface faisant face audit boîtier d'équipement (1) de ladite partie de bride (22) est en contact avec une surface externe d'une partie d'ouverture (11) dudit boîtier d'équipement (1) d'une manière étanche à l'air.

3. Extrémité d'étanchéité de câble selon la revendication 1 ou la revendication 2, **caractérisée en ce que**:
une surface conique progressivement rétrécie (26c) dont le diamètre se réduit vers un côté de bord externe d'une face d'extrémité faisant face audit boîtier d'équipement (1) de ladite partie de bride de raccord métallique de pression (52) à partir d'une partie supérieure (26b) de ladite partie de saillie (26) est prévue au niveau d'une surface périphérique interne de ladite partie de saillie (26).
